# EUROPEAN PATENT APPLICATION

(11) **EP 4 814 715 A1**
(43) Date of publication of application: **30.09.2026**
(21) Application number: 23962861.3
(22) Date of filing: 29.12.2023
(51) Int. Cl.: G06F 9/48

(54) **DISTRIBUTED APPLICATION PROGRAM ALLOCATION METHOD AND APPARATUS, AND ELECTRONIC DEVICE AND STORAGE MEDIUM**

(71) Applicant: Siemens Aktiengesellschaft, 80333 München (DE)
(72) Inventor: WANG, Qi, Wuhan, Hubei 430075 (CN); LIU, Yi, Wuhan, Hubei 430075 (CN); DING, Meng, Wuhan, Hubei 430075 (CN); TIAN, Deyu, Wuhan, Hubei 430075 (CN); FU, Zenan, Wuhan, Hubei 430075 (CN)
(74) Representative: Isarpatent
(86) International application number: PCT/CN2023/143485
(87) International publication number: WO 2025/138187

(57) **Abstract**

The present disclosure relates to an orchestration method and apparatus for a distributed application, an electronic device, and a storage medium. The orchestration method includes: receiving a configuration specification for an application; analyzing the configuration specification to generate multiple different configuration parameter schemes as a configuration scheme space; searching for and generating a candidate configuration parameter for the configuration space scheme based on the analysis of the configuration specification, a performance metric of a stored historical configuration parameter scheme, and a preset evaluation rule, and generating a candidate configuration file by using a predetermined configuration file template and the candidate configuration parameter; deploying the candidate configuration file on one or more target devices; receiving a current performance metric of each application from the target device; evaluating, based on the current performance metric, whether the configuration parameter in the candidate configuration file meets a target configuration requirement; and if the configuration parameter in the candidate configuration file meets the target configuration requirement, output the candidate configuration file as a result configuration file.

## Description

### TECHNICAL FIELD

The present disclosure generally relates to the field of automation technologies, and more specifically, to an orchestration method and apparatus for a distributed application, an electronic device, and a storage medium.

### BACKGROUND

Real-time or deterministic capability is an important aspect of an industrial automation solution, especially in manufacturing that requires high precision and a high speed. In a conventional PLC controller, a real-time capability is managed by a dedicated engineering tool and device. However, new automation solutions (such as robotics) are shifting toward more open systems (such as Linux), and adopt IT ecosystems and tools to develop and operate entire systems.

These new solutions bring new challenges:
Application creators have greater flexibility in developing applications and running applications in a distributed system, but it becomes more difficult to manage the applications and to meet quality requirements.

Due to complexity of a system, it is difficult to adjust real-time performance of distributed applications:
- different configurations of an application may have different impacts on the system;
- performance evaluation requires collecting and processing different metrics from applications running on different devices;
- when applications share a resource on one device, there are excessively many possibilities;
   and
- if an application changes, a configuration may need to be adjusted again.

Currently, there is no solution that automates an adjustment process.

Existing orchestration tools are intended for single devices, and the orchestration tools are primarily used for hardware or systems rather than for distributed applications. System simulation is one way to identify optimal configuration parameters, but building a simulation model is very costly, and it is impossible to cover all physical parameters and conditions.

### SUMMARY

A brief overview of the present invention is provided below to provide a basic understanding of some aspects of the present invention. It should be understood that this overview is not an exhaustive overview of the present invention. This overview is not intended to determine a key or an important part of the present invention, nor is it intended to limit the scope of the present invention. The purpose of this overview is merely to provide certain concepts in a simplified form, with the certain concepts serving as a prelude to a more detailed description that will be discussed later.

In view of this, the present disclosure provides, for a plurality of distributed devices in an automation system, a method for obtaining an optimal configuration scheme for performing resource allocation and execution scheduling for a plurality of real-time applications on all distributed devices, so that the optimal configuration scheme can meet a real-time performance requirement of all applications.

According to an aspect of the present disclosure, an orchestration method for a distributed application is provided. The method includes:
an initialization step: receiving a configuration specification for an application, where the configuration specification is used to define initialization information for performing an orchestration operation on the application;
a configuration scheme generation step: analyzing the configuration specification to generate multiple different configuration parameter schemes as a configuration scheme space;
a candidate configuration file generation step searching for and generating a candidate configuration parameter for the configuration space scheme based on the analysis of the configuration specification, a performance metric of a stored historical configuration parameter scheme, and a preset evaluation rule, and generating a candidate configuration file by using a predetermined configuration file template and the candidate configuration parameter;
a configuration file deployment step: deploying the candidate configuration file on one or more target devices;
a performance metric reception step: receiving a current performance metric of each application from the target device;
a configuration file evaluation step: evaluating, based on the current performance metric, whether the configuration parameter in the candidate configuration file meets a target configuration requirement; and
a result configuration file output step: if the configuration parameter in the candidate configuration file meets the target configuration requirement, outputting the candidate configuration file as a result configuration file.

In this manner, a method can be provided for automatically obtaining an optimal configuration scheme for performing resource allocation and execution scheduling for a plurality of real-time applications on all distributed devices.

Optionally, in an example of the foregoing aspect, if the configuration parameter in the candidate configuration file does not meet the target configuration requirement, the method is repeatedly performed starting from the candidate configuration file generation step, until a configuration parameter meeting the target configuration requirement is obtained.

In this manner, the configuration parameter may be adjusted based on a performance metric collected by using the candidate configuration parameter, until the target configuration requirement, namely, a real-time performance requirement of each application, may be met.

Optionally, in an example of the foregoing aspect, the configuration specification includes: adjustment configuration information, device and resource configuration information, application resource requirement information, and application dependency relationship information.

In this manner, appropriate initialization information may be set as required.

Optionally, in an example of the foregoing aspect, the application is an application requiring real-time performance installed on a distributed device.

According to another aspect of the present disclosure, an orchestration method for a distributed application is provided. The method includes:
receiving a candidate configuration file, where the candidate configuration file includes a resource scheduling parameter and an application configuration parameter;
allocating a resource for each application based on the resource scheduling parameter;
scheduling execution of each application based on the application configuration parameter; and
collecting a performance metric of each application and sending the performance metric to a first orchestration device.

In this manner, resource allocation and application execution may be performed on each distributed device, and the performance metric of each application may be further collected as a reference for adjusting the configuration parameter.

According to another aspect of the present disclosure, a first orchestration apparatus for a distributed application is provided. The apparatus includes:
an initialization unit, configured to receive a configuration specification for an application, where the configuration specification is used to define initialization information for performing an orchestration operation on the application;
a configuration scheme generation unit, configured to analyze the configuration specification to generate multiple different configuration parameter schemes as a configuration scheme space;
a candidate configuration file generation unit, configured to: search for and generate a candidate configuration parameter for the configuration space scheme based on the analysis of the configuration specification, a performance metric of a stored historical configuration parameter scheme, and a preset evaluation rule, and generate a candidate configuration file by using a predetermined configuration file template and the candidate configuration parameter;
a configuration file deployment unit, configured to deploy the candidate configuration file on one or more target devices;
a performance metric reception unit, configured to receive a current performance metric of each application from the target device;
a configuration file evaluation unit, configured to evaluate, based on the current performance metric, whether the configuration parameter in the candidate configuration file meets a target configuration requirement; and
a result configuration file output unit, configured to: if the configuration parameter in the candidate configuration file meets the target configuration requirement, output the candidate configuration file as a result configuration file.

According to another aspect of the present disclosure, a second orchestration apparatus for a distributed application is provided and disposed on a distributed device. The apparatus includes:
a candidate configuration file reception unit, configured to receive a candidate configuration file, where the candidate configuration file includes a resource scheduling parameter and an application configuration parameter;
a resource allocation unit, configured to allocate a resource for each application based on the resource scheduling parameter;
an application execution unit, configured to schedule execution of each application based on the application configuration parameter; and
a performance metric collection unit, configured to collect a performance metric of each application and send the performance metric to a first orchestration apparatus.

According to another aspect of the present disclosure, an electronic device is provided. The electronic device includes: at least one processor; and a memory coupled to the at least one processor, where the memory is configured to store an instruction, and when the instruction is executed by the at least one processor, the processor is enabled to perform the foregoing methods.

According to another aspect of the present disclosure, a non-transitory machine-readable storage medium is provided, storing an executable instruction. When the instruction is executed, a machine is enabled to perform the foregoing methods.

According to another aspect of the present disclosure, a computer program product is provided. The computer program product is tangibly stored on a computer-readable medium and includes a computer-executable instruction, and when the computer-executable instruction is executed, at least one processor is enabled to perform the foregoing methods.

According to the orchestration methods in embodiments of the present disclosure, an optimal configuration scheme may be found for resource allocation and scheduling execution for a distributed real-time application.

Orchestration time may be reduced based on an appropriate evaluation rule, and the evaluation rule may be adjusted and extended.

A configuration parameter of each application may be automatically adjusted when the application changes.

### BRIEF DESCRIPTION OF THE DRAWINGS

The foregoing and other objectives, characteristics, and advantages of the present invention will be more easily understood with reference to the following descriptions of embodiments of the present invention in conjunction with the accompanying drawings. The components in the accompanying drawings are merely used for illustrating the principles of the present invention. In the accompanying drawings, same or similar technical features or components are represented by using same or similar reference numerals. In the drawings,
FIG. 1 is a diagram of an architecture of a distributed automation system;
FIG. 2 is a flowchart of an example process of an orchestration method 200 for a distributed application performed on a first orchestration apparatus side according to an embodiment of the present invention;
FIG. 3 is a flowchart of an example process of an orchestration method 300 for a distributed application performed on a distributed device according to an embodiment of the present disclosure;
FIG. 4 is a block diagram of an example configuration of a first orchestration apparatus 400 for a distributed application according to another embodiment of the present disclosure;
FIG. 5 is a block diagram of an example configuration of a second orchestration apparatus 500 for a distributed application according to still another embodiment of the present disclosure; and
FIG. 6 is a block diagram of an electronic device according to an embodiment of the present disclosure.

### Reference numerals:

| | | | |
|---|---|---|---|
| 10: | distributed automation system; | 102-1, 102-2, ..., 102-n: | distributed devices; |
| 104-1, 104-2, ..., 104-m: | applications; | 200 and 300: | orchestration methods for a distributed application; |
| S202, S204, S206, S208, S210, S212, and S214: | steps; | S302, S304, S306, S308: | steps; |
| 400: | first orchestration apparatus; | 402: | initialization unit; |
| 404: | configuration scheme generation unit; | 406: | candidate configuration file generation unit; |
| 408: | configuration file deployment unit; | 410: | performance metric reception unit; |
| 412: | configuration file evaluation unit; | 414: | result configuration file output unit; |
| 500: | second orchestration apparatus; | 502: | candidate configuration file reception unit; |
| 504: | resource allocation unit; | 506: | application execution unit; |
| 508: | performance metric collection unit; | 600: | electronic device; |
| 602: | processor; | 604: | memory. |

### DETAILED DESCRIPTION

A subject described in this specification will now be discussed with reference to example implementations. It is to be understood that, discussion of the implementations are merely intended to make a person skilled in the art better understand and implement the subject described in this specification, and is not intended to limit the protection scope of the claims, the applicability, or examples. The functions and arrangements of the discussed elements can be changed without departing from the protection scope of the content of the present disclosure. Various processes or components may be omitted, replaced, or added in the various examples as required. For example, the described method may be executed based on a sequence different from the sequence described herein, and steps may be added, omitted, or combined. In addition, features described with respect to some examples may also be combined in another example.

As used in this specification, the term "include" and its variants represent open terms, and mean "including but not limited to". The term "based on" means " based at least partially on". The terms "one embodiment" and "an embodiment" mean "at least an embodiment". The term "another embodiment" means "at least one other embodiment". The terms "first", "second", and the like may refer to different or same objects. Other definitions may be included explicitly or implicitly in the following. Unless otherwise clearly specified in the context, a definition of a term is consistent throughout this specification.

According to the technical solutions of the present disclosure, for a plurality of distributed devices in an automation system, a method for obtaining an optimal configuration scheme for performing resource allocation and execution scheduling for a plurality of real-time applications on all distributed devices is provided, so that the optimal configuration scheme can meet a real-time performance requirement of all applications.

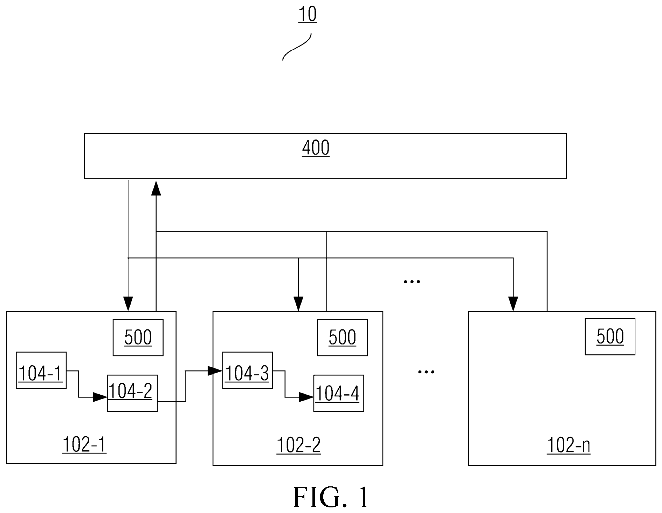

FIG. 1 is a diagram of an architecture of a distributed automation system 10. The automation system 10 includes a plurality of distributed devices 102-1, 102-2, ..., 102-n, and a first orchestration apparatus 400 according to an embodiment of the present disclosure. Each of the distributed devices 102-1, 102-2, ..., 102-n is installed with one or more applications (App) (or threads) 104-1, 104-2, ..., 104-m. The application or thread requires real-time performance, for example, low latency and low jitter. Applications on different distributed devices may further communicate with one another, and resources (for example, a CPU, and a network) used by each application are managed together. The first orchestration apparatus 400 in this embodiment of the present disclosure may perform orchestration methods according to embodiments of the present disclosure, to generate an optimal configuration scheme for performing resource allocation and execution scheduling for a plurality of real-time applications on all distributed devices, to meet a real-time performance requirement of by all applications. One second orchestration apparatus 500 is disposed on each of the distributed devices 102-1, 102-2, ..., 102-n, and is configured to: perform resource allocation and execution scheduling for each application, collect a performance metric of the application and send the performance metric to the first orchestration apparatus 400.

The following describes orchestration methods and apparatuses for a distributed application according to embodiments of the present disclosure with reference to the accompanying drawings.

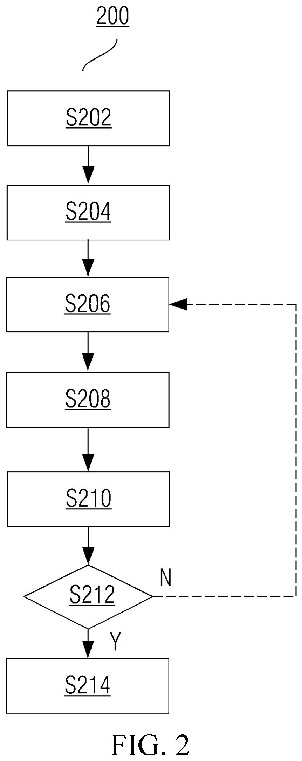

The orchestration methods for a distributed application according to embodiments of the present disclosure relate to two aspects: a first orchestration apparatus for generating a configuration scheme of the distributed application and a distributed device installing an application. The first orchestration apparatus may be disposed on a server independent of a distributed device, and operation steps performed by the first orchestration apparatus are shown in FIG. 2.

FIG. 2 is a flowchart of an example process of an orchestration method 200 for a distributed application performed on a first orchestration apparatus side according to an embodiment of the present invention. The method specifically includes:
First, in an initialization step S202, a configuration specification for an application is received, where the configuration specification is used to define initialization information for performing an orchestration operation on the application.

In this specification, "orchestration" means managing system resources and applications to implement real-time performance of each application during application execution. For example, the orchestration may include: allocating a system resource (a CPU resource or a network resource) to a certain application on a specific device, determining which applications share which resources, determining when a certain application is run, and the like.

The configuration specification may specifically include: adjustment configuration information, device and resource configuration information, application resource requirement information, application dependency relationship information, and the like.

The adjustment configuration information is used to define a parameter of orchestration operation behavior, for example, a result type, and an adjustment period, that is, how frequently an orchestration scheme for the application is adjusted. The result type may be an optimal configuration scheme or a first configuration scheme that can meet a requirement. The optimal configuration scheme is obtained by repeatedly adjusting the configuration parameter in a process of performing the orchestration method until the optimal configuration scheme is obtained. The first configuration scheme that meets the requirement is an obtained configuration scheme that first meets a real-time requirement of all applications in the process of performing the orchestration method. Although the scheme may not be optimal, adjustment time can be reduced.

The device and resource configuration information is used to define related information of a device or a resource, for example, an IP address, security verification information, and an available resource on each device, for example, an independent CPU core, or a network interface used for real-time communication.

The application resource requirement information is used to define a resource requirement such as a priority and a performance requirement such as latency, for each application.

The application dependency relationship information is used to define latency dependency relationships between a plurality of applications. For example, latency of an application A is a part of latency of an application B, and the application A needs to be executed before the application B.

Each piece of information in the configuration specification may be preset by a person skilled in the art as required, and is not limited to the foregoing descriptions. Information in the received configuration specification is equivalent to an initialization parameter for performing an orchestration operation. After the configuration specification is received, the subsequent orchestration operation is triggered. For example, the orchestration operation may be triggered based on the adjustment period in the adjustment configuration information.

Next, in a configuration scheme generation step S204, the received configuration specification is analyzed to generate multiple different configuration schemes as a configuration scheme space.

Different value ranges of each parameter related to the system resource and the application may be obtained based on the analysis of the configuration specification, different parameter configuration schemes may be generated based on different values of each parameter, and all possible parameter configuration schemes are stored as one configuration scheme space.

In a candidate configuration file generation step S206, a candidate configuration parameter is searched for and generated in the configuration space scheme based on the analysis of the configuration specification, a performance metric of a historical configuration scheme, and a preset evaluation rule, and a candidate configuration file is generated by using a predetermined configuration file template and the candidate configuration parameter.

The historical configuration scheme may be a configuration parameter previously used by a system, or a candidate configuration parameter evaluated in a process of performing the orchestration method.

In the solution according to this embodiment of the present disclosure, for each set of candidate configuration parameters, a performance metric of each application is tracked and recorded when resource allocation and application scheduling are performed for the distributed device by using the set of configuration parameters. In addition, some evaluation rules are preset, and the performance metric and the evaluation rules are used as reference standards for selecting and generating the candidate configuration parameter for the configuration scheme space.

The evaluation rules include a rule for selecting a next set of candidate configuration parameters and a rule for sorting candidate configuration parameters. For example, the rule for selecting a next set of candidate configuration parameters may include:
A selected configuration parameter is not selected again;
because sharing a same resource by multiple applications degrades performance, if one application reaches a latency limit, another application is not added to the same resource to share the resource; and
because latency is affected by applications having dependency relationships, if one application reaches a maximum latency limit, performance of another application having a dependency relationship needs to be improved.

The rule for sorting candidate configuration parameters, for example, may include:
fewer performance-limit violations;
small overall latency and low jitter during operation; and
more balanced resource sharing.

Configuration parameters that meet the foregoing aspects are more favorable parameters and may be ranked higher during sorting for selection.

It may be understood that appropriate evaluation rules may be defined by a person skilled in the art as required, and are not limited to the foregoing descriptions.

The candidate configuration parameter may be searched for and generated in the configuration space scheme based on the analysis of the configuration specification, the performance metric of the historical configuration scheme, and the preset evaluation rule.

In the solution according to this embodiment of the present disclosure, an appropriate configuration file template may be preset, and the candidate configuration file represents the candidate configuration parameter in a format of the predetermined configuration file template.

In a configuration file deployment step S208, the candidate configuration file is deployed on one or more target devices.

The orchestration method according to the present disclosure may be applied to orchestration of a plurality of applications on a same distributed device, or orchestration of a plurality of applications on each of a plurality of distributed devices. The candidate configuration file is deployed on a corresponding target device based on different cases.

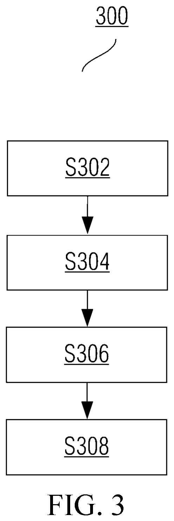

On the target device, resource allocation and application execution are performed based on the parameter in the candidate configuration file. During this process, a performance metric of each application is collected and sent to the orchestration device that performs the orchestration method. A detailed process is described below with reference to FIG. 3.

In a performance metric reception step S210, a current performance metric of each application is received from the target device.

In a configuration file evaluation step S212, whether a configuration parameter in the candidate configuration file meets a target configuration requirement is evaluated based on the current performance metric. If an evaluation result is Y, a result configuration file output step S214 is performed, to output the candidate configuration file as a result configuration file.

The target configuration requirement is a preset real-time performance requirement of each application, for example, minimum jitter, and non-violation of a latency requirement. If the target configuration requirement is met, it is considered that performing the orchestration method according to this embodiment of the present disclosure by using the parameter included in the current candidate configuration file for performing resource allocation and execution scheduling for the application on each distributed device may meet a real-time performance requirement of the application on each distributed device. Therefore, the current candidate configuration file is output as the result configuration file, and used as a parameter for subsequent execution of the distributed application.

If an evaluation result is N, step S206 needs to be performed again, a new candidate configuration parameter is searched for and generated in the configuration space scheme based on the analysis of the configuration specification, a performance metric of a historical configuration scheme, and the preset evaluation rule, and subsequent steps are performed.

The performance metric of the historical configuration scheme herein includes the performance metric of each application received from the target device in a previous execution round. A new candidate configuration parameter is obtained through further adjustment based on the performance metric.

Step S206 to step S212 are repeatedly performed, until a configuration parameter meeting the target configuration requirement is obtained.

In this process, the candidate configuration parameter is continuously adjusted based on a performance metric of each application collected in each round, until the configuration parameter that may meet the target configuration requirement is obtained.

The foregoing describes, with reference to FIG. 2, the operation steps performed by the first orchestration apparatus in a process of performing the orchestration method for a distributed application according to this embodiment of the present disclosure. Operational steps performed by a distributed device side are shown in FIG. 3. FIG. 3 is a flowchart of an example process of an orchestration method 300 for a distributed application performed on a distributed device according to an embodiment of the present disclosure. The method specifically includes:
First, in step S302, a candidate configuration file is received, where the candidate configuration file includes a resource scheduling parameter and an application configuration parameter.

In step S304, a resource is allocated for each application based on the resource scheduling parameter.

The resource scheduling parameter may include resource binding information and a scheduling parameter. For example, if the resource scheduling parameter indicates that a certain application is to be bound to a first core of a CPU, the application is moved to the assigned CPU core. The scheduling parameter is, for example, a to-be-selected scheduling algorithm, for example, a CFS (completely fair scheduler) algorithm. A person skilled in the art may set an appropriate scheduling algorithm in the scheduling parameter as required.

In step S306, execution of each application is scheduled based on the application configuration parameter.

The application configuration parameter may include information such as a priority, latency, and an execution period. For example, an execution period set for an application may be used to determine when and which application is to be executed.

The candidate configuration file includes at least the foregoing information, and the distributed device performs resource allocation and application execution based on the information.

In step S308, a current performance metric of each application is collected and sent to an orchestration device.

During execution of applications, real-time tracking is performed for each application, and a resource scheduling and allocation process is also tracked in real time, to collect the performance metric. Real-time tracking means that there is almost no additional performance overhead on the application during real-time tracking.

Each distributed device performs the operations of the steps shown in FIG. 3, and multiple execution rounds of the steps in FIG. 3 may be performed on each distributed device. In each execution round, different configuration parameters may be used, and different performance metrics may be collected. In the orchestration device, historical performance metrics obtained from each distributed device under different configuration parameters are stored and used as a reference for generating the candidate configuration parameter.

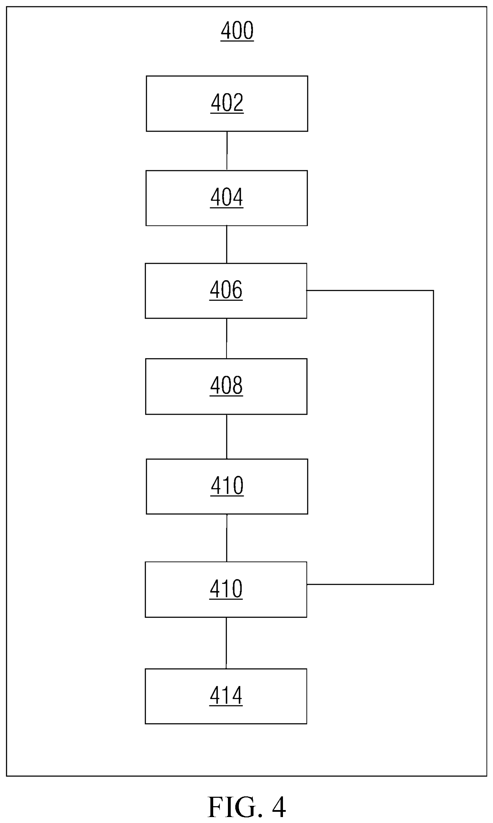

FIG. 4 is a block diagram of an example configuration of a first orchestration apparatus 400 for a distributed application according to another embodiment of the present disclosure. The first orchestration apparatus 400 for a distributed application is configured to perform the orchestration method for a distributed application shown in FIG. 2. The first orchestration apparatus 400 may be a device independent of a distributed device, or may be disposed on a server.

The first orchestration apparatus 400 for a distributed application shown in FIG. 4 includes an initialization unit 402, a configuration scheme generation unit 404, a candidate configuration file generation unit 406, a configuration file deployment unit 408, a performance metric reception unit 410, a configuration file evaluation unit 412, and a result configuration file output unit 414.

The initialization unit 402 is configured to receive a configuration specification for an application, where the configuration specification is used to define initialization information for performing an orchestration operation on the application.

The configuration scheme generation unit 404 is configured to analyze the configuration specification to generate multiple different configuration parameter schemes as a configuration scheme space.

The candidate configuration file generation unit 406 is configured to: search for and generate a candidate configuration parameter for the configuration space scheme based on the analysis of the configuration specification, a performance metric of a stored historical configuration parameter scheme, and a preset evaluation rule, and generate a candidate configuration file by using a predetermined configuration file template and the candidate configuration parameter.

The configuration file deployment unit 408 is configured to deploy the candidate configuration file on one or more target devices.

The performance metric reception unit 410 is configured to receive a current performance metric of each application from the target device.

The configuration file evaluation unit 412 is configured to: evaluate, based on the current performance metric, whether the configuration parameter in the candidate configuration file meets a target configuration requirement; and if the configuration parameter in the candidate configuration file does not meet the target configuration requirement, enable the candidate configuration file generation unit to 406 to start repeatedly performing the operation, until a configuration parameter meeting the target configuration requirement is obtained.

The result configuration file output unit 414 is configured to: if the configuration parameter in the candidate configuration file meets the target configuration requirement, output the candidate configuration file as a result configuration file.

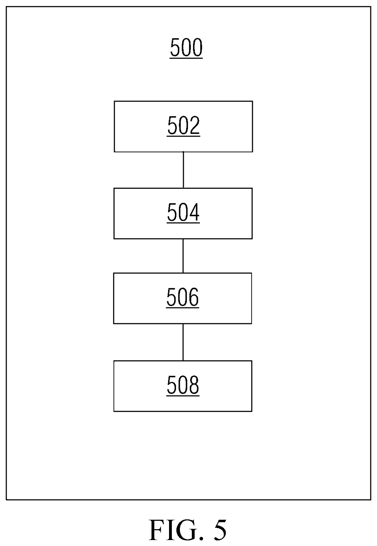

FIG. 5 is a block diagram of an example configuration of a second orchestration apparatus 500 for a distributed application according to still another embodiment of the present disclosure. The second orchestration apparatus 500 for a distributed application is disposed on each distributed device, and is configured to perform the orchestration method for a distributed application shown in FIG. 3.

The second orchestration apparatus 500 for a distributed application according to this embodiment of the present disclosure includes: a candidate configuration file reception unit 502, a resource allocation unit 504, an application execution unit 506, and a performance metric collection unit 508.

The candidate configuration file reception unit 502 is configured to receive a candidate configuration file, where the candidate configuration file includes a resource scheduling parameter and an application configuration parameter.

The resource allocation unit 504 is configured to allocate a resource for each application based on the resource scheduling parameter.

The application execution unit 506 is configured to schedule execution of each application based on the application configuration parameter.

The performance metric collection unit 508 is configured to collect a performance metric of each application and send the performance metric to an orchestration device.

Details of operations and functions of all parts of the first orchestration apparatus 400 and the second orchestration apparatus 500 for a distributed application may be, for example, the same as or similar to related parts of the embodiments of the orchestration methods for a distributed application in the present disclosure described with reference to FIG. 1 to FIG. 3. Details are not described herein again.

It should be noted that, structures of the orchestration apparatuses 400 and 500 for a distributed application and constituent units thereof shown in FIG. 4 and FIG. 5 are merely examples. A person skilled in the art may modify the block diagrams of the structures shown in FIG. 4 and FIG. 5 as required.

The orchestration methods and apparatuses for a distributed application according to the present disclosure at least have one or more of the following advantages.

According to the orchestration methods in embodiments of the present disclosure, an optimal configuration scheme may be found for resource allocation and scheduling execution for a distributed real-time application.

Orchestration time may be reduced based on an appropriate evaluation rule, and the evaluation rule may be adjusted and extended.

A configuration parameter of each application may be automatically adjusted when the application changes.

The foregoing describes the methods and apparatuses according to embodiments of the present disclosure with reference to FIG. 1 to FIG. 5. Each unit of the first orchestration apparatus and the second orchestration apparatus for a distributed application may be implemented by using hardware, software, or a combination of hardware and software.

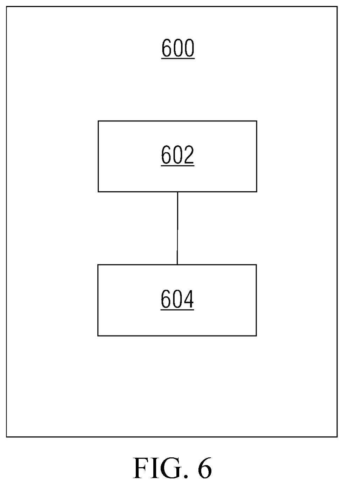

FIG. 6 is a block diagram of an electronic device 600 according to an embodiment of the present disclosure. According to an embodiment, the electronic device 600 may include at least one processor 602. The processor 602 executes at least one computer-readable instruction stored or encoded in a computer-readable storage medium (namely, a memory 604).

It should be understood that, when the computer-executable instruction stored in the memory 604 is executed, the at least one processor 602 is enabled to perform various operations and functions described in the foregoing embodiments of the present disclosure with reference to FIG. 1 to FIG. 5.

According to an embodiment, a non-transitory machine-readable medium is provided. The non-transitory machine-readable medium may include a machine-executable instruction. When the instruction is executed by a machine, the machine is enabled to perform various operations and functions described in the foregoing embodiments of the present disclosure with reference to FIG. 1 to FIG. 5.

According to an embodiment, a computer program is provided, including a computer-executable instruction. When the computer-executable instruction is executed, the at least one processor is enabled to perform various operations and functions described in the foregoing embodiments of the present disclosure with reference to FIG. 1 to FIG. 5.

According to an embodiment, a computer program product is provided, including a computer-executable instruction. When the computer-executable instruction is executed, the at least one processor is enabled to perform various operations and functions described in the foregoing embodiments of the present disclosure with reference to FIG. 1 to FIG. 5.

It should be understood that embodiments of this specification are described in a progressive manner, and for the same and similar parts of embodiments, references may be made to each other. Each embodiment focuses on a difference from other embodiments. For example, the foregoing apparatus embodiments, the electronic device embodiment, and the machine-readable storage medium embodiment are substantially similar to the method embodiments and therefore are only briefly described. For related descriptions, refer to partial descriptions of the method embodiments.

The foregoing describes specific embodiments of this specification. Other embodiments fall within the scope of the appended claims. In some implementations, the actions or steps recited in the claims may be performed in an order different from that described in the embodiments while still achieving the desired results. In addition, the processes depicted in the accompanying drawings are not necessarily performed in a specific order or sequential order to achieve the desired results. In some implementations, multitasking and parallel processing are also possible or may be advantageous.

Not all steps and units in the procedures and the diagrams of the system structures are necessary, and some steps or units may be omitted according to an actual requirement. The apparatus structure described in the embodiments may be a physical structure or a logical structure. That is, some units may be implemented by the same physical entity, or some units may be implemented by a plurality of physical entities, or may be implemented by some components in a plurality of independent devices together.

Example embodiments are described above with reference to specific implementations illustrated in the accompanying drawings, but this does not represent all embodiments that may be implemented or fall within the protection scope of the claims. The term "example" used in the entire specification means "used as an example, an instance, or an illustration", and does not mean "preferred" or "superior" over other embodiments. To provide an understanding of the described technologies, the specific implementations include specific details. However, these technologies may be implemented without these specific details. In some instances, to avoid confusing the concept of the described embodiments, a well-known structure and apparatus are shown in a block diagram form.

The descriptions of the content of the present disclosure are provided to allow any person of ordinary skill in the art to implement or use the content of the present disclosure. Various modifications to the content of the present disclosure will be obvious to those skilled in the art. In addition, a general principle defined in this specification can be applied to other variants without departing from the protection scope of the content of the present disclosure. Therefore, the content of the present disclosure is not limited to the examples and designs described in this specification, but is consistent with the widest range conforming to the principle and novelty disclosed in this specification.

The foregoing descriptions are merely example embodiments of the present invention, and are not intended to limit the present invention. Within the spirit and principles of the present invention, any modifications, equivalent replacements, improvements, and the like shall fall within the scope of protection of the present invention.

The nouns and pronouns related to persons in this patent application are not limited to a specific gender.

## Claims

1. An orchestration method for a distributed application (200), comprising:
an initialization step (S202): receiving a configuration specification for an application, wherein the configuration specification is used to define initialization information for performing an orchestration operation on the application;
a configuration scheme generation step (S204): analyzing the configuration specification to generate multiple different configuration parameter schemes as a configuration scheme space;
a candidate configuration file generation step (S206): searching for and generating a candidate configuration parameter for the configuration space scheme based on the analysis of the configuration specification, a performance metric of a stored historical configuration parameter scheme, and a preset evaluation rule, and generating a candidate configuration file by using a predetermined configuration file template and the candidate configuration parameter;
a configuration file deployment step (S208): deploying the candidate configuration file on one or more target devices;
a performance metric reception step (S210): receiving a current performance metric of each application from the target device;
a configuration file evaluation step (S212): evaluating, based on the current performance metric, whether the configuration parameter in the candidate configuration file meets a target configuration requirement; and
a result configuration file output step (S214): if the configuration parameter in the candidate configuration file meets the target configuration requirement, outputting the candidate configuration file as a result configuration file.

2. The orchestration method (200) according to claim 1, wherein if it is determined in the configuration file evaluation step (S212) that the configuration parameter in the candidate configuration file does not meet the target configuration requirement, the method is repeatedly performed starting from the candidate configuration file generation step (S206), until a configuration parameter meeting the target configuration requirement is obtained.

3. The orchestration method (200) according to claim 1, wherein the configuration specification comprises: adjustment configuration information, device and resource configuration information, application resource requirement information, and application dependency relationship information.

4. The orchestration method (200) according to claim 1, wherein the application is an application requiring real-time performance installed on a distributed device.

5. An orchestration method for a distributed application (300), performed on a distributed device, and comprising:
receiving a candidate configuration file (S302), wherein the candidate configuration file comprises a resource scheduling parameter and an application configuration parameter;
allocating a resource for each application based on the resource scheduling parameter (S304);
scheduling execution of each application based on the application configuration parameter (S306); and
collecting a performance metric of each application (S308) and sending the performance metric to an orchestration device.

6. A first orchestration apparatus (400) for a distributed application, comprising:
an initialization unit (402), configured to receive a configuration specification for an application, wherein the configuration specification is used to define initialization information for performing an orchestration operation on the application;
a configuration scheme generation unit (404), configured to analyze the configuration specification to generate multiple different configuration parameter schemes as a configuration scheme space;
a candidate configuration file generation unit (406), configured to: search for and generate a candidate configuration parameter for the configuration space scheme based on the analysis of the configuration specification, a performance metric of a stored historical configuration parameter scheme, and a preset evaluation rule, and generate a candidate configuration file by using a predetermined configuration file template and the candidate configuration parameter;
a configuration file deployment unit (408), configured to deploy the candidate configuration file on one or more target devices;
a performance metric reception unit (410), configured to receive a current performance metric of each application from the target device;
a configuration file evaluation unit (412), configured to evaluate, based on the current performance metric, whether the configuration parameter in the candidate configuration file meets a target configuration requirement; and
a result configuration file output unit (414), configured to: if the configuration parameter in the candidate configuration file meets the target configuration requirement, output the candidate configuration file as a result configuration file.

7. The first orchestration apparatus (400) according to claim 6, wherein
the configuration file evaluation unit (412) is further configured to: if the configuration parameter in the candidate configuration file does not meet the target configuration requirement, enable the candidate configuration file generation unit to repeatedly perform the operation, until a configuration parameter meeting the target configuration requirement is obtained.

8. A second orchestration apparatus (500) for a distributed application, disposed on a distributed device, and comprising:
a candidate configuration file reception unit (502), configured to receive a candidate configuration file, wherein the candidate configuration file comprises a resource scheduling parameter and an application configuration parameter;
a resource allocation unit (504), configured to allocate a resource for each application based on the resource scheduling parameter;
an application execution unit (506), configured to schedule execution of each application based on the application configuration parameter; and
a performance metric collection unit (508), configured to collect a performance metric of each application and send the performance metric to a first orchestration apparatus.

9. An electronic device (600), comprising:
at least one processor (602); and
a memory (604) coupled to the at least one processor (602), wherein the memory is configured to store an instruction, and when the instruction is executed by the at least one processor (602), the processor (602) is enabled to perform the method according to any one of claims 1 to 4, and 5.

10. A non-transitory machine-readable storage medium, storing an executable instruction, wherein when the instruction is executed, a machine is enabled to perform the method according to any one of claims 1 to 4, and 5.

11. A computer program product, wherein the computer program product is tangibly stored on a computer-readable medium and comprises a computer-executable instruction, and when the computer-executable instruction is executed, at least one processor is enabled to perform the method according to any one of claims 1 to 4, and 5.
